# EUROPÄISCHE PATENTSCHRIFT

(11) **EP 2 460 198 B1**
(45) Veröffentlichungstag und Bekanntmachung des Hinweises auf die Patenterteilung: **06.04.2016**
(21) Anmeldenummer: 10735006.8
(22) Anmeldetag: 22.07.2010
(51) Int. Cl.: H01L 41/09, H02N 2/12, F16H 49/00

(54) **ANTRIEB**
DRIVE
ENTRAÎNEMENT

(30) Priorität: 30.07.2009 DE 102009028102
(43) Veröffentlichungstag der Anmeldung: 06.06.2012
(73) Patentinhaber: Robert Bosch GmbH, 70442 Stuttgart (DE)
(72) Erfinder: IHL, Wilfried, 74211 Leingarten (DE); ZIMMERMANN, Andre, 73730 Esslingen (DE); DENES, Istvan, 71336 Waiblinge/Hohenacker (DE)
(86) Internationale Anmeldenummer: PCT/EP2010/060651
(87) Internationale Veröffentlichungsnummer: WO 2011/012532

(56) Entgegenhaltungen:
- WO-A1-2009/108072
- DE-A1- 10 045 054
- DE-C1- 19 747 566
- US-A- 6 029 543
- BARTH O: "Harmonic piezodrive - miniaturized servo motor" MECHATRONICS, PERGAMON PRESS, OXFORD, GB LNKD- DOI:10.1016/S0957-4158(99)00062-8, Bd. 10, Nr. 4-5, 1. Juni 2000 (2000-06-01) , Seiten 545-554, XP004195795 ISSN: 0957-4158

## Beschreibung

Die Erfindung betrifft einen Antrieb mit einer ersten Antriebseinheit und einer zweiten Antriebszeitheit, wobei die erste Antriebseinheit einen ersten Zahnkranz aufweist und die zweite Antriebseinheit einen zweiten Zahnkranz aufweist, die in der Art eines Gleitkeilgetriebes miteinander zusammenwirken. Die Anmeldung nimmt die Priorität der DE 10 2009 028 102 A1 in Anspruch, auf deren Inhalt hiermit vollumfänglich als Referenz verwiesen wird.

### Stand der Technik

Einen Antrieb der genannten Art offenbart die EP 1 318 328 A2. Der erste Zahnkranz wird durch eine Außenverzahnung einer Welle, der zweite Zahnkranz wird durch eine Innenverzahnung eines Antriebsringes gebildet. Die Außenverzahnung der Welle weist eine um mindestens eins kleinere Anzahl von Zähnen als die Innenverzahnung des Antriebsringes auf. Sowohl der Antriebsring als alternativ auch die Welle können durch Stößel, welche durch Piezoaktoren gebildet werden, angetrieben werden, so dass der Antriebsring durch Eingriff seiner Innenverzahnung in die Außenverzahnung der Welle auf der Welle abrollt wird und eine Drehbewegung ausführt. Erfindungsgemäß ist nur eine der Verzahnungen vollständig ausgebildet, wodurch Herstellungskosten reduziert werden sollen. Weiteres Ziel der Zahnhöhenreduzierung ist, den Verformungsbedarf von dem flexiblen Zahnkranz zu senken, da die mit Piezoaktoren erreichbare Strukturdeformation nur sehr klein ist.

Einen weiteren Antrieb der genannten Art offenbart die Offenlegungsschrift DE 19746609 A1. Der erste Zahnkranz wird durch ein elastisches, ortsfest abgestütztes Zahnelement mit einer Innenverzahnung, der zweite Zahnkranz durch ein getriebenes Element mit einer Außenverzahnung gebildet. Die Innenzahnung des Zahnelements weist eine größere Zahnanzahl auf, als der zweite Zahnkranz. Durch eine umlaufende Deformation des Zahnelementes können Innenverzahnung und Außenverzahnung in Eingriff derart gebracht werden, dass das getriebene Element mittels seiner Außenverzahnung auf der Innenverzahnung des Zahnelementes abrollt und eine Drehbewegung ausführt. Die umlaufende Deformation des Zahnelementes wird durch mehrere Piezoelemente erzeugt. Die Piezoelemente sind zu diesem Zweck gleichmäßig um das Zahnelement mit radialer Ausrichtung angeordnet. Durch jeweils ein Piezoelement wird in einem Abschnitt des Zahnelementes ein in radialer Richtung wirkender Druck ausgeübt, wobei die Piezoelemente zeitlich versetzt aktiviert werden.

DE 100 45 054 A1 offenbart eine kompakte Nockenphaseneinstelleinrichtung die ein flexibles Element aufweist, das in eine nicht runde Form verformt wird und mit einem zusammenpassenden Ringzahnrad oder einem Kreiselement an winkelig beabstandeten Stellen zur Übertragung eines Nockenwellenantriebsdrehmomentes zwischen diesen in Eingriff steht. Das flexible Element weist vortretende Überhöhungen mit Zähnen oder Reibflächen auf, die mit gleichen Flächen in Eingriff stehen, die an dem zusammenpassenden Zahnrad oder dem zusammenpassenden Element ausgebildet sind. Das flexible Element und das Ringzahnrad weisen eine Differenzlänge oder Differenzanzahl von Zähnen auf. Die Phaseneinstelleinrichtung umfasst mehrere winkelig beabstandete radiale Piezoaktuatoren, die sich erweitern und zusammenziehen, um zu bewirken, dass die vortretenden Überhöhungen (aber nicht das flexible Element selbst) in sich drehenden Wellen um das kreisförmige Ringzahnrad wandern. Somit wird jeder Punkt des flexiblen Elementes fortlaufend in und aus dem Kontakt mit dem Ringzahnrad bewegt, da sich die Kontaktpunkte (Überhöhungen) in Wellen drehen. Da sich die Anzahl von Zähnen des flexiblen Elementes von der des Ringzahnrades unterscheidet, bewirkt eine Umdrehung der Wellen, dass sich das flexible Element relativ zu dem Ringzahnrad um eine Anzahl von Zähnen bewegt, die gleich der Differenz ist.

In dem Artikel "Harmonie piezodrive - miniaturized servo motor" von Oliver Barth, Mechantronic 10 (2000), 545-554, wir offenbart, dass die Verwendung miniaturisierter DC-Motoren in Servomotor-Anwendungen einige Nachteile zeigt, wie sehr hoher Geschwindigkeit und daher in Kombination mit Radsätzen einer hohen Getriebeübersetzung kombiniert Spiel einführen und niedrige Effizienz zeigen. Der Artikel schlägt eine andere Art von Motor Prinzip durch die Kombination aus einem Harmonic-Drive-Getriebe und Stapel-Piezoaktoren vor. Die Aktoren habe die Funktionalität von einem Wellengenerator und erzeugen eine wandernde Welle in dem Flexspline Element des Getriebes.

DE 197 47 566 C1 beschreibt ein piezoangetriebenes Spannungswellen-Getriebe mit einer, eine Verzahnung aufweisenden starren Einheit (Circular Spline), einer, ebenfalls eine Verzahnung aufweisenden flexiblen Einheit (Flexspline) sowie einem ellipsenförmigen Auslenk-Generator (Wave-Generator), der die flexible Einheit derart dynamisch deformiert, dass die Verzahnung der flexiblen Einheit mit der Verzahnung der starren Einheit stets in zwei getrennten Bereichen in Eingriff bringbar ist, so dass sich die flexible Einheit relativ zur starren Einheit bewegt, dass der Auslenkgenerator Piezostellelemente aufweist, die ortsfest relativ zur flexiblen Einheit angeordnet sind und die mittels aufeinander abgestimmter Längenänderungen die flexible Einheit deformieren. Das Spannungswellen-Getriebe zeichnet sich dadurch aus, dass Stapelaktoren zusammen mit einer Wegübersetzungseinheit gekoppelt werden, die die Längenausdehnung des Stapelaktors mittels einer drehbar gelagerten Hebelarmes derart vergrößert, dass der durch den Stapelaktor angelenkte Hebelarm die elastische Einheit entsprechend deformiert. Überdies werden Biege-Piezoaktoren eingesetzt, die unmittelbar die flexible Einheit zu einer Ellipse deformieren.

US 6,029,543 offenbart eine Vorrichtung und ein Verfahren zum rotativen Antrieb eines Spannungswellengetriebes. Die Schritte des Verfahrens umfassen Anordnen einer primären und einer sekundären becherförmigen Abrollbuchse koaxial innerhalb einer drehbaren unbiegsame kreisförmige Keilnut, und Ausbilden schwenkbaren Finger in der sekundären Flexspline, Vorspannen der radial nach außen schwenkbaren Finger um die primäre Abrollbuchse in einer sequentiellen Weise zu kontaktieren. Die Anordnung der Zähne zwischen dem primären Flexnutenring und dem kreisförmigen Nutenring erfolgt derart, dass diese ineinander greifen, um eine Relativdrehung dazwischen zu bewirken. Eine Anordnung von piezoelektrischen Elementen ist in Kontakt mit dem zweiten Flexnutenring und einem benachbarten nicht rotierenden Bauteil angeordnet. Ein elektrischer Strom wird durch die piezoelektrischen Elemente sequenziert, um eine dimensionale Veränderung darin zu bewirken, um so die Vorspannung der primären Abrollbuchse durch die sekundäre Abrollbuchse zu bewirken.

Nachteil der bekannten Antriebe ist, dass die Piezoelemente Längsänderungen ausführen müssen, die größer sind als die Höhe der Zähne der ineinander eingreifenden Zahnkränze. Dies hat zur Folge, dass hohe elektrische Felder eingesetzt werden müssen oder die Zähne mit einer reduzierten Höhe ausgebildet werden müssen. Das Anlegen von hohen elektrischen Feldern bedarf besonderer Vorrichtungen und kann auch bezüglich der Umweltverträglichkeit Probleme aufwerfen. Die Reduzierung der Höhe der Zähne begünstigt ein ungewünschtes Überrasten/Überspringen der Verzahnungen. Des Weiteren ist eine hohe Deformation insbesondere von Piezo-Bulk-Materialien problematisch, da die Gefahr besteht, dass Sprünge im Material entstehen.

### Offenbarung der Erfindung

Gegenstand der Erfindung ist ein Antrieb, der eine erste Antriebseinheit und eine zweite Antriebseinheit umfasst, wobei die erste Antriebseinheit einen ersten Zahnkranz aufweist und die zweite Antriebseinheit einen zweiten Zahnkranz aufweist, die in der Art eines Gleitkeilgetriebes miteinander zusammenwirken, wobei der erste Zahnkranz deformierbar ist und eine unterschiedliche Anzahl von Zähnen aufweist, als der zweite Zahnkranz, und die erste Antriebseinheit mindestens zwei in ihrer Länge änderbare Aktuatoren aufweist, wobei die mindestens zwei Aktuatoren derart angeordnet sind und mit dem ersten Zahnkranz zusammenwirken, dass eine Längsänderung der Aktuatoren in eine Deformation des ersten Zahnkranzes mit einem zu der Längsänderung der Aktuatoren senkrechten Anteil umgesetzt wird.

Dadurch, dass eine Längsänderung der Aktuatoren in einen senkrechten Anteil der Deformation des ersten Zahnkranzes umgesetzt wird, ist es möglich, durch eine verhältnismäßig geringe Längsänderung der Aktuatoren eine verhältnismäßig starke Deformation des ersten Zahnkranzes zu bewirken. Dies ermöglicht es, beispielsweise wenn Piezoelemente als Aktuatoren verwendet werden, diese mit kleinen Abmaßen auszubilden und für den Betrieb des Antriebs mit kleinen Feldern zu betreiben. Insbesondere ist es nicht erforderlich, dass die Längsänderung eines Aktuators im Bereich der Höhe der Zähne eines Zahnkranzes ist.

Erfindungsgemäß umfasst die erste Antriebseinheit mindestens zwei Biegeelemente und ein zum deformierbaren ersten Zahnkranz relativ starres Befestigungsmittel, wobei die Biegeelemente das Befestigungsmittel mit dem Zahnkranz verbinden und ein Aktuator auf jeweils einem Biegeelement in Längsausrichtung fest angeordnet ist, so dass eine Längsänderung eines Aktuators zu einer Verbiegung eines Biegeelementes und einer Deformation des ersten Zahnkranzes führt. Ein Biegeelement wird verwendet, um eine Längsänderung des Aktuators zu verstärken, das heißt, in eine Änderung umzusetzen, die größer ist die Längsänderung des Aktuators. Die Verstärkung kann beispielsweise über die Länge der Biegeelemente beeinflusst werden.

Erfindungsgemäß weist ein Biegelement zwischen dem auf dem Biegelement angeordneten Aktuator und ersten Zahnkranz eine Schwächung, vorzugsweise in Form einer Kerbe oder einer Nut, auf, so dass das Biegelement im Bereich des ersten Zahnkranzes bei Kontakt des ersten Zahnkranzes mit dem zweiten Zahnkranz nachgibt zur Verbesserung der Kontaktfläche zwischen dem ersten Zahnkranz und dem zweiten Zahnkranz in diesem Bereich.

In einer weiteren, nicht-erfindungsgemäßen Ausführungsform des Antriebs sind wenigstens zwei Aktuatoren am ersten deformierbaren Zahnkranz in der Weise angeordnet, dass eine Längsänderung eines Aktuators zu einer Verbiegung des ersten Zahnkranzes führt. Vorzugsweise sind die Aktuatoren dabei auf dem Umfang des ersten Zahnkranzes gegenüberliegend angeordnet.

In einer weiteren Ausgestaltung sind die Aktuatoren doppelseitig auf dem ersten deformierbaren Zahnkranz angeordnet. Doppelseitig bedeutet, dass der Zahnkranz eine Innen- und eine Außenseite bzw. eine Ober- und eine Unterseite aufweist und zwei Aktuatoren jeweils gegenüberliegend auf der Innen- und Außenseite bzw. Ober- und Unterseite Zahnkranzes angeordnet sind.

Darüber hinaus kann es erfindungsgemäß vorgesehen sein, dass die Aktuatoren hinsichtlich ihrer Längsausdehnung durch Beschränkungselemente beschränkt sind. Solche Beschränkungselemente können beispielsweise durch Schultern oder Zapfen gebildet sein. Durch die Beschränkung der Längsausdehnung der Aktuatoren können kompressive Spannungen auf den Aktuator einwirken, wodurch ein Verschleiß der Aktuatoren durch Rissbildung vermieden werden kann.

In einer Ausgestaltung der Erfindung mit doppelseitig angeordneten Aktuatoren kann es vorgesehen sein, dass eine wie zuvor beschriebene Beschränkung der Längsausdehnung durch Bolzen erfolge, die den ersten deformierbaren Zahnkranz durchdringen und so beiderseitig eine Längsbegrenzung der Aktuatoren bilden.

Vorzugsweise ist der senkrechte Anteil der Deformation des ersten Zahnkranzes größer, besonders bevorzugt um mindestens einen Faktor zwei, als die Längsänderung der Aktuatoren.

Weitere vorteilhafte Ausführungsführungen finden sich in den abhängigen Ansprüchen.

Die Erfindung wird im Folgenden anhand von Ausführungsformen, die durch Zeichnungen dargestellt sind, näher erläutert.

### Kurze Beschreibung der Zeichnungen

Es zeigen
- Fig. 1: eine perspektivische Ansicht einer ersten Ausführungsform eines erfindungsgemäßen Antriebs,
- Fig. 2a: eine erste Querschnittsansicht durch die erste Antriebseinheit des in Fig. 1 gezeigten Antriebs,
- Fig. 2b: eine zweite Querschnittsansicht durch die erste Antriebseinheit,
- Fig. 3a: einen Querschnitt durch einen Abschnitt eines Biegeelementes mit einem aufgeklebtem Aktuator, der unbetätigt ist,
- Fig. 3b: den in Fig. 3a gezeigten Abschnitt des Biegeelements mit betätigtem Aktuator,
- Fig. 4: eine perspektivische Ansicht einer zweiten Ausführungsform eines erfindungsgemäßen Antriebes,
- Fig. 5: eine Aufsicht auf die in Fig. 4 gezeigte Ausführungsform,
- Fig. 6: einen Querschnitt durch einen Teil der in Fig. 4 gezeigten Ausführungsform.
- Fig. 7: eine perspektivische Ansicht einer weiteren, nichterfindungsgemäßen Ausführungsform eines Antriebs, und
- Fig. 8: unterschiedliche Längsbegrenzungen für erfindungsgemäß vorsehbare Aktuatoren.

### Ausführungsformen der Erfindung

Gleiche oder einander entsprechende Bauteile sind in den Figuren mit denselben Bezugszeichen versehen.

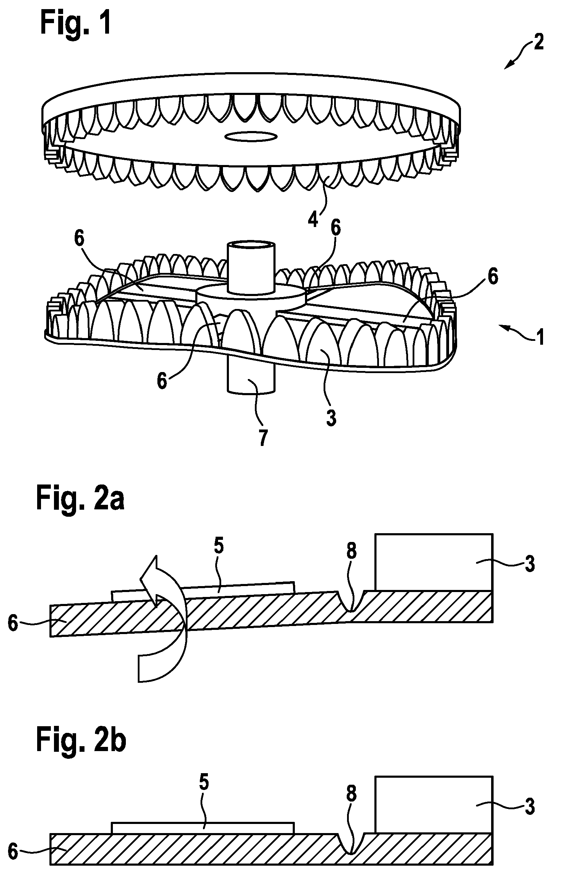

Die Fig. 1 zeigt eine erste Ausführungsform eines erfindungsgemäßen Antriebes, in einer perspektivischen Ansicht.

Der dargestellte Antrieb umfasst eine erste Antriebseinheit 1 und eine zweite Antriebseinheit 2. Die erste Antriebseinheit 1 weist einen ersten Zahnkranz 3, die zweite Antriebseinheit 2 einen zweiten Zahnkranz 4 auf. Der erste Zahnkranz 3 ist deformierbar ist und weist eine unterschiedliche Anzahl von Zähnen auf als der zweite Zahnkranz 4. Der erste Zahnkranz 3 und der zweite Zahnkranz 4 wirken in der Art eines Gleitkeilgetriebes zusammen.

In der dargestellten ersten Ausführungsform weisen der erste Zahnkranz 3 und der zweite Zahnkranz 4 einen im Wesentlichen gleichen Durchmesser auf und sind koaxial, mit den jeweiligen Zähnen sich gegenüberliegend, angeordnet. Durch eine geeignete Deformation des ersten Zahnkreises in im Wesentlichen axialer Richtung können die Zähne des ersten Zahnkranzes 3 mit denen des zweiten Zahnkranzes 4 in Eingriff gebracht werden. Geschieht dies in zeitlich versetzter Folge, führt dies zu einer Drehbewegung des zweiten Zahnkranzes 4 relativ zum ersten Zahnkranz 3. Der Übersicht wegen sind der erste Zahnkreis 3 und der zweite Zahnkreis mit einem axialen Abstand voneinander angeordnet dargestellt.

Des Weiteren umfasst die erste Antriebseinheit 1 mindestens zwei, hier vier, Biegeelemente 6 und ein zum deformierbaren ersten Zahnkranz 3 relativ starres Befestigungsmittel 7. Die Biegeelemente 6 sind in diesem Ausführungsbeispiel als Speichen ausgebildet, das Befestigungsmittel 7 ist ein Schaft, der im Zentrum des ersten Zahnkreises 3 angeordnet ist. Die Biegeelemente 6 verbinden das Befestigungsmittel 7 fest mit dem Zahnkranz 3. Die Biegeelemente 6 sind zum Schaft 7 radial ausgerichtet und gleichmäßig um diesen verteilt.

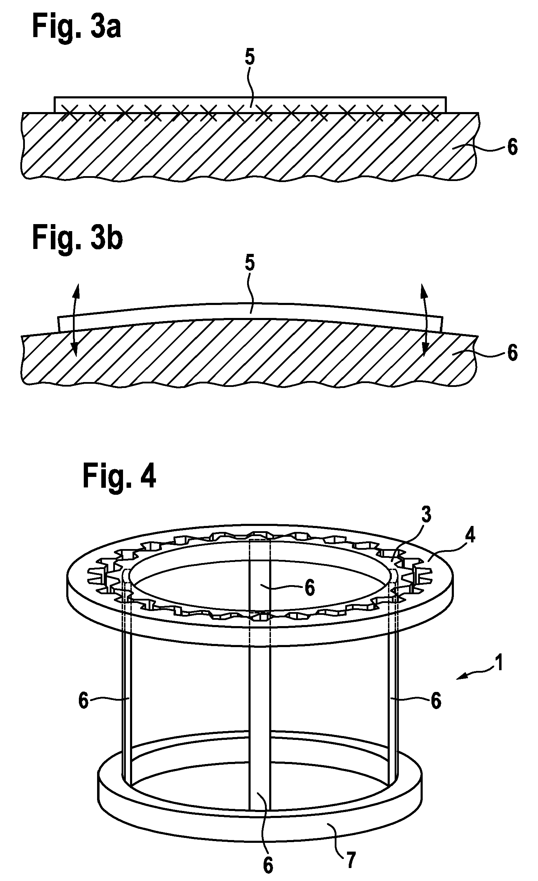

Des Weiteren umfasst der Antrieb eine der Zahl der Biegelemente 6 entsprechende Zahl von Aktuatoren 5, siehe Fig. 2a und 2b. Die Aktuatoren 5 sind in ihrer Länge änderbar, beispielsweise im Falle von elektro-aktiven Materialien durch Anlegen eines elektrischen Feldes. Jeweils ein Aktuator 5 ist auf jeweils einem Biegeelement 7 in Längsausrichtung, in diesem Ausführungsbeispiel also radial, fest angeordnet. Eine Längsänderung des Aktuators 5 führt zu einer Verbiegung des Biegeelementes 6, auf dem der Aktuator 5 angeordnet ist, siehe Fig. 3a, 3b. Da die Biegeelemente 6 mit dem ersten Zahnkreis 3 verbunden sind, führt die Verbiegung eines Biegeelementes 6 zu einer Deformation des ersten Zahnkranzes 3. Eine Längsänderung eines Aktuators 5, die im Wesentlichen in radialer Richtung erfolgt, führt zu einer Deformation des ersten Zahnkranzes 3 in im Wesentlichen axialer Richtung. Die Länge des Biegeelementes kann größer als die Länge eines Aktuators 5 sein, so dass eine Längsänderung eines Aktuators 5 durch das jeweilige Biegeelement 6 verstärkt wird. In diesem Ausführungsbeispiel ist der axiale Anteil der Deformation des ersten Zahnkranzes 3, der durch die Längsänderung eines Aktuators 5 bewirkt wird, größer, vorzugsweise mindestens um einen Faktor zwei, als die Längsänderung des Aktuators 5.

Vorteil bei der radialen Ausrichtung des Aktuators ist einerseits, dass durch die Länge des Biegeelements eine Art Hebelmechanismus realisierbar ist. Anderseits sind die Richtung und der Angriffspunkt von den Deformationskräften anders als bei einer direkt am Zahnkranz liegenden radialen Aktuatorkonfiguration, wie im Stand der Technik beschrieben.

Zwischen dem Aktuator 5 und dem ersten Zahnkranz 3 ist im jeweiligen Biegeelement 6 eine Schwächung 8, hier in Form einer Nut, vorgesehen, siehe Fig. 2a, 2b. Die Schwächung 8 bewirkt, dass das Biegelement bei Kontakt des ersten Zahnkranzes 3 mit dem zweiten Zahnkranz 4 nachgibt, wodurch die Kontaktfläche zwischen dem ersten Zahnkranz 3 und dem zweiten Zahnkranz 4 in diesem Bereich erhöht wird. Fig. 2a zeigt ein Biegeelement 6, das im Bereich der Schwächung 8 nicht deformiert ist, Fig. 2b ein Biegeelement 6, das im Bereich der Schwächung 8 nachgibt.

Zum Betreiben des Antriebs werden die Aktuatoren 5 in zeitlich versetzter Folge betätigt und die Biegeelemente 6 zu Deformationen gezwungen. Diese Biegedeformationen haben einen sequentiellen Charakter und führen zu einer wellenartigen Deformation des ersten Zahnkranzes 3. Aufgrund der unterschiedlichen Anzahl der Zähne zwischen dem ersten Zahnkranz 3 und dem zweiten Zahnkranz 4 führt aufgrund der umlaufenden Propagation der Deformationswelle auf dem ersten Zahnkranz 3 der zweite Zahnkranz 4 gegenüber dem ersten Zahnkranz 3 eine Rotation um einen bestimmten Winkelabschnitt aus. Eine Wiederholung dieses Prozesses führt zu einer relativen Winkelgeschwindigkeit zwischen dem ersten Zahnkranz 3 und dem zweiten Zahnkranz 4.

Für die Erzeugung einer derartigen Deformationswelle sind mindestens zwei Biegeelemente 6 mit Aktuatoren 5 notwendig. In diesem Falle kann durch die Deformation der Biegeelemente 6 der erste Zahnkranz 3 zur Ausbildung einer umlaufenden Deformationswelle in einer Eigenfrequenz angeregt werden. Um den ersten Zahnkranz 3 außerhalb einer Eigenfrequenz für die Ausbildung einer solchen Deformationswelle anzuregen, werden mindestens drei Biegeelemente 6 mit Aktuatoren 5 verwendet.

Als Aktuatoren 5 können elektroaktive Materialien, beispielsweise elektroaktive Polymere, magnetostriktive Materialien oder piezoelektrische Materialien verwendet werden. Bevorzugt ist die Verwendung eines piezoelektrischen polymeren Verbundwerkstoffes, der in der Form eines Flächenwandlers, auch Patch-Aktuator genannt, ausgebildet ist. Derartige Flächenwandler sind grundsätzlich bekannt. Bei dem bevorzugten Aktuatortyp (Piezo Patch Aktuatoren) bildet eine dünne Piezokeramikschicht den Funktionswerkstoff, wobei die Piezokeramikschicht in einem Polymer eingebettet und eingekapselt ist.

Ein solcher Flächenwandler kann beispielsweise mittels eines Klebers (in der Fig. 3a durch Kreuze dargestellt) auf der Oberfläche eines Biegeelementes 6 fest angeordnet werden. Die Ausrichtung des Aktuators 5 erfolgt entsprechend so, dass eine Längsänderung des Aktuators 5 mittels des Biegeelementes 6 in eine Deformation des ersten Zahnkranzes 3 mit einem zu der Längsänderung des Aktuators 5 senkrechten Anteil, hier axialem Anteil, umgesetzt wird.

Es kann genau ein Aktuator 5 oder auch mehrere Aktuatoren 5 auf jeweils einem Biegeelement 6 angeordnet werden. Beispielsweise können zwei Aktuatoren 5 auf gegenüberliegenden Seiten eines Biegeelementes 6 in Form einer trimorphen Struktur befestigt werden. Die Deformation des Biegelementes 6 und damit des Zahnkranzes 3 kann auf diese Weise verstärkt werden.

Die erste Antriebseinheit 1 kann sowohl als Stator als auch als Rotor des Antriebes ausgebildet sein. Die Ausbildung der Antriebseinheit 1 als Stator ist bevorzugt, da dies die Kontaktierung der Aktuatoren 5 vereinfacht. Der erste Zahnkranz 3 und die Biegungselemente 6 können aus demselben Material oder aus unterschiedlichen Materialien bestehen. Bevorzugt sind Materialien, die elastisch deformierbar sind. In diesem Ausführungsbeispiel besteht der erste Zahnkranz 3 und die Biegungselemente 6 aus Federstahl. Die gewünschten Deformationseigenschaften der einzelnen Elemente kann neben der Wahl eines geeigneten Materials durch die Abmessungen beeinflusst werden. Beispielsweise ist es möglich, dass die Wandstärke der Biegungselemente 6 sich von der Wandstärke des ersten Zahnkreises 3 unterscheidet.

Die Fig. 4 bis 6 zeigen schematisch eine zweite Ausführungsform eines erfindungsgemäßen Antriebs in verschiedenen Ansichten.

Entsprechend der ersten Ausführungsform umfasst der Antrieb gemäß der zweiten Ausführungsform eine erste Antriebseinheit 1 und eine zweite Antriebseinheit. Die erste Antriebseinheit 1 umfasst einen ersten Zahnkranz 3, vier Biegeelemente 6, auf denen nicht näher dargestellte Aktuatoren 5 angeordnet sind, und ein Befestigungsmittel 7. Die Darstellung der zweiten Antriebseinheit 2 beschränkt sich auf einen zweiten Zahnkranz 4.

Im Gegensatz zur ersten Ausführungsform ist der erste Zahnkranz 3 konzentrisch innerhalb des zweiten Zahnkranzes 4 angeordnet. Der erste Zahnkranz 3 weist eine nicht näher dargestellte Außenverzahnung auf, die mit einer nicht näher dargestellte Innenverzahnung des zweiten Zahnkreises 4 in der Art eines Gleitkeilgetriebes zusammenwirkt. Das Befestigungsmittel 7 ist als im Vergleich zum ersten Zahnkranz 3 vergleichsweise starrer Ring 7 mit entsprechendem Durchmesser ausgebildet und axial zum ersten Zahnkranz 3 angeordnet. Die Biegelemente 6 verbinden das Befestigungsmittel 7 mit dem ersten Zahnkranz 3, wobei die Befestigungsmittel 6 axial und umlaufend gleichmäßig verteilt angeordnet sind.

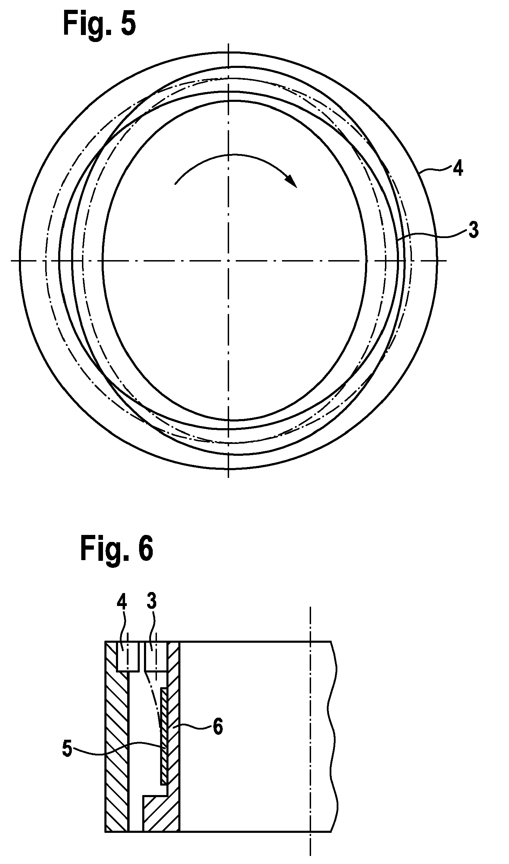

Die Biegeelemente 6 sind entsprechend der Biegeelemente 6 der ersten Ausführungsform ausgebildet. Die Aktuatoren 5 sind entsprechend der ersten Ausführungsform in Längsausrichtung auf jeweils einem Biegeelement 6 angeordnet, siehe Fig. 6. Entsprechend der Biegeelemente sind die Aktuatoren 5 axial ausgerichtet. Eine Längsänderung eines Aktuators 5 führt zu einer Verbiegung eines Biegeelementes 6 und mittelbar über diese zu einer Deformation des ersten Zahnkranzes 3 mit einem überwiegend radialen Anteil.

Funktion und Aufbau entsprechen im Übrigen der ersten Ausführungsform.

Alternativ ist es ebenfalls möglich, den ersten Zahnkranz 3 mit einer Innenverzahnung und den zweiten Zahnkranz 4 mit einer Außenverzahnung auszubilden, und den zweiten Zahnkranz 4 innerhalb des ersten Zahnkranzes 3 anzuordnen.

Neben einer rein radialen oder rein axialen Anordnung der Biegeelemente 6 sind auch Mischformen mit sowohl radialen als auch axialen Anteilen möglich. Selbiges gilt für die Anordnung der Aktuatoren 5.

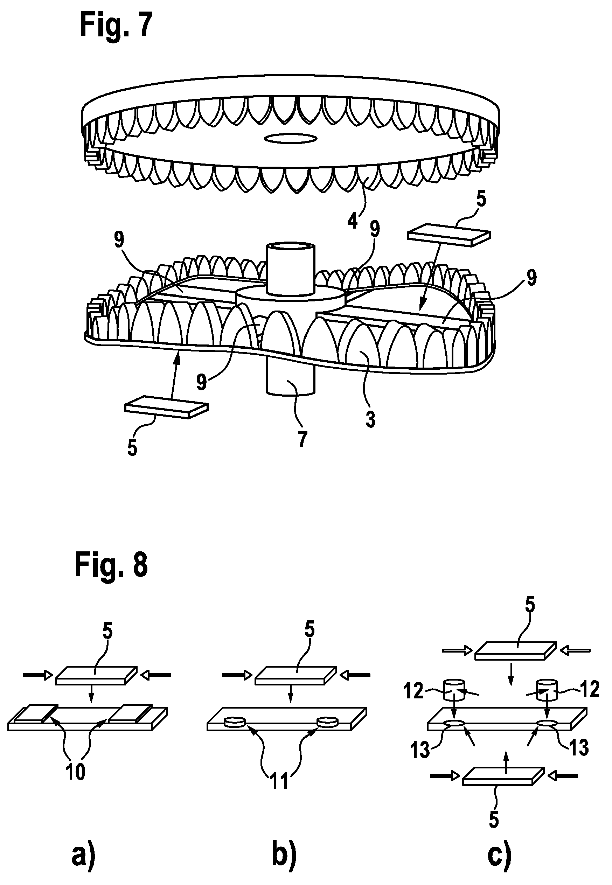

Die Fig. 7 zeigt eine weitere Ausführungsform eines erfindungsgemäßen Antriebes, in einer perspektivischen Ansicht, ähnlich der Fig. 1. Der dargestellte Antrieb umfasst eine erste Antriebseinheit 1 und eine zweite Antriebseinheit 2. Die erste Antriebseinheit 1 weist einen ersten Zahnkranz 3, die zweite Antriebseinheit 2 einen zweiten Zahnkranz 4 auf. Der erste Zahnkranz 3 ist deformierbar ist und weist eine unterschiedliche Anzahl von Zähnen auf als der zweite Zahnkranz 4. Der erste Zahnkranz 3 und der zweite Zahnkranz 4 wirken in der Art eines Gleitkeilgetriebes zusammen.

In der dargestellten ersten Ausführungsform weisen der erste Zahnkranz 3 und der zweite Zahnkranz 4 einen im Wesentlichen gleichen Durchmesser auf und sind koaxial, mit den jeweiligen Zähnen sich gegenüberliegend, angeordnet. Durch eine geeignete Deformation des ersten Zahnkreises in im Wesentlichen axialer Richtung können die Zähne des ersten Zahnkranzes 3 mit denen des zweiten Zahnkranzes 4 in Eingriff gebracht werden. Geschieht dies in zeitlich versetzter Folge, führt dies zu einer Drehbewegung des zweiten Zahnkranzes 4 relativ zum ersten Zahnkranz 3. Der Übersicht wegen sind der erste Zahnkreis 3 und der zweite Zahnkreis mit einem axialen Abstand voneinander angeordnet dargestellt.

Des Weiteren umfasst die erste Antriebseinheit 1 mindestens zwei, hier vier, Speichenelemente 9 und ein zum deformierbaren ersten Zahnkranz 3 relativ starres Befestigungsmittel 7. Das Befestigungsmittel 7 ist in der gezeigten Ausführungsform ein Schaft, der im Zentrum des ersten Zahnkreises 3 angeordnet ist, welcher über die Speichenelemente 9 fest mit dem Zahnkranz 3 verbunden ist. Die Speichenelemente 9 sind zum Schaft 7 radial ausgerichtet und gleichmäßig um diesen verteilt.

An dem deformierbaren ersten Zahnkranz 3 sind Aktuatoren 5 angeordnet, welche beispielsweise im Falle von elektro-aktiven Materialien durch Anlegen eines elektrischen Feldes in ihrer Länge änderbar sind. Eine Längsänderung des Aktuators 5 führt zu einer Verbiegung des deformierbaren Zahnkranzes 3, ähnlich der zuvor beschriebenen Verbiegung des Biegeelements 6. Die Aktuatoren 5 können in der gleichen Weise in den Figuren 3a und 3b für die Biegeelemente 6 gezeigt an dem deformierbaren Zahnkranz 3 befestigt sein.

Fig. 8 unterschiedliche Längsbegrenzungen für erfindungsgemäß vorsehbare Aktuatoren. Wie in Fig. 8a gezeigt kann eine Längsbegrenzung der Aktuatoren 5 durch begrenzende Schultern 10 vorgesehenen sein, wobei der Aktuator 5 zwischen den Schultern 10 eingebettet ist. Durch die längsbegrenzenden Schultern 10 wird eine verschleißbedingte Rissbildung im Falle der Verwendung von Aktuatoren auf Basis von piezo-elektrischen Keramiken verringert oder sogar vermieden. Insbesondere kann es vorgesehen sein, dass der durch die begrenzenden Schultern 10 gebildete Aufnahmeraum kleiner ist als die Längsausdehnung eines Aktuators 5 im Ruhezustand. Hierdurch wird eine kontinuierliche Druckspannung über die Schultern 10 auf den Aktuator 5 ausgeübt, wodurch sich der zuvor beschriebende materialschonende Effekt weiter verstärkt. Die als Längsbegrenzung dienenden Schultern 10 können durch geeignete Mittel wie beispielsweise Kleben an dem deformierbaren ersten Zahnkranz 3 oder einem Biegeelement 6 angebracht sein, oder auch integraler Bestandteil dieser sein. Integraler Bestandteil bedeutet in diesem Zusammenhang, dass Längsbegrenzungen 10 und der Zahnkranz 3 bzw. das Biegeelement 6 einstückig ausgebildet sind und so längsbegrenzende Aufnahmen in dem Zahnkranz 3 oder dem Biegeelement 6 bilden, in welche Aktuatoren 5 eingebracht werden können.

Wie in Fig. 8b gezeigt, können Längsbegrenzungen auch in Form von Bolzen 11 ausgeführt sein. Auch die Bolzen 11 können wie die Schultern 10 an dem deformierbaren Zahnkranz 3 oder ein Biegeelement 6 durch geeignete Mittel angebracht sein, oder einen integralen Bestandteil dieser bilden.

In einer Ausgestaltung des erfindungsgemäßen Antriebs mit auf gegenüberliegenden Seiten des Zahnkranzes 3 oder eines Biegeelementes 6 angeordneten Aktuatoren liegt es im Rahmen der Erfindung wie in Fig. 8c gezeigt, als Längsbegrenzungen Bolzen 12 vorzusehen, welche durch Bohrungen 13 in dem Zahnkranz 3 oder einem Biegeelement 6 hindurch reichen und so beiderseitig Längsbegrenzungen ausbilden, zwischen welchen gegenüberliegende Aktuatoren 5 angeordnet werden können. Neben den gezeigten geometrischen Ausgestaltungen liegt es im Rahmen der Erfindung, die Längsbegrenzungen in beliebiger geometrischer Form auszugestalten.

## Patentansprüche

1. Antrieb, umfassend eine erste Antriebseinheit (1) und eine zweite Antriebseinheit (2), wobei die erste Antriebseinheit (1) einen ersten Zahnkranz (3) aufweist und die zweite Antriebseinheit (2) einen zweiten Zahnkranz (4) aufweist, die in der Art eines Gleitkeilgetriebes miteinander zusammenwirken, wobei der erste Zahnkranz (3) deformierbar ist und eine unterschiedliche Anzahl von Zähnen aufweist als der zweite Zahnkranz (4), und die erste Antriebseinheit (1) mindestens zwei in ihrer Länge änderbare Aktuatoren (5) aufweist, wobei die mindestens zwei Aktuatoren (5) derart angeordnet sind und mit dem ersten Zahnkranz (3) zusammenwirken, dass eine Längsänderung der Aktuatoren (5) in eine Deformation des ersten Zahnkranzes (3) mit einem zu der Längsänderung der Aktuatoren (5) senkrechten Anteil umgesetzt wird, **dadurch gekennzeichnet, dass** die erste Antriebseinheit (1) mindestens zwei Biegeelemente (6) und ein zum deformierbaren ersten Zahnkranz (3) relativ starres Befestigungsmittel (7) aufweist, wobei die Biegeelemente (6) das Befestigungsmittel (7) mit dem Zahnkranz (3) verbinden und ein Aktuator (5) auf jeweils einem Biegeelement (7) in Längsausrichtung fest angeordnet ist, so dass eine Längsänderung eines Aktuators zu einer Verbiegung eines Biegeelementes (6) und einer Deformation des ersten Zahnkranzes (3) führt und ein Biegeelement (6) zwischen dem auf dem Biegeelement (6) angeordneten Aktuator (5) und ersten Zahnkranz (3) eine Schwächung (8), vorzugsweise in Form einer Kerbe oder einer Nut, aufweist, so dass das Biegeelement (6) im Bereich des ersten Zahnkranzes (3) bei Kontakt des ersten Zahnkranzes (3) mit dem zweiten Zahnkranz (3) nachgibt zur Verbesserung der Kontaktfläche zwischen dem ersten Zahnkranz (3) und dem zweiten Zahnkranz (3) in diesem Bereich.

2. Antrieb nach Anspruch 1, wobei der senkrechte Anteil der Deformation des ersten Zahnkranzes (3) größer ist, vorzugsweise um mindestens einen Faktor zwei, als die Längsänderung der Aktuatoren (5).

3. Antrieb nach einem der vorhergehenden Ansprüche, wobei der erste Zahnkranz (3) und der zweite Zahnkranz (4) koaxial oder konzentrisch angeordnet sind.

4. Antrieb nach Anspruch 3, wobei das Befestigungsmittel (7) ein Schaft oder ein Ring ist.

5. Antrieb nach Anspruch 3 oder 4, wobei die mindestens zwei Biegeelemente (6) radial oder axial angeordnet sind.

6. Antrieb nach einem der vorhergehenden Ansprüche, wobei ein Aktuator (5) ein elektroaktives Material, beispielsweise ein elektroaktives Polymer, ein magnetostriktives Material oder ein piezoelektrisches Material, vorzugsweise einen eine piezoelektrische keramische Dünnschicht umfassenden Verbundwerkstoff, aufweist.

7. Antrieb nach einem der vorhergehenden Ansprüche, wobei die erste Antriebseinheit (1) als Stator und die zweite Antriebseinheit (2) als Rotor ausgebildet ist.

8. Antrieb nach einem der vorhergehenden Ansprüche, wobei der erste Zahnkranz (3) und die Biegungselemente (6) aus demselben Material oder unterschiedlichen Materialien bestehen, vorzugsweise aus einem elastisch deformierbaren Material bestehen.

9. Antrieb nach einem der vorhergehenden Ansprüche, wobei die Aktuatoren (5) hinsichtlich ihrer Längsausdehnung durch Beschränkungselemente (10, 11, 12) beschränkt sind.

10. Antrieb nach einem der vorhergehenden Ansprüche, wobei jeweils zwei Aktuatoren (5) an gegenüberliegenden Seiten eines Biegeelementes (6) angeordnet sind.

11. Antrieb nach Anspruch 10, wobei als Längsbegrenzungen Bolzen (12) vorgesehen sind, welche durch Bohrungen (13) eines Biegeelements (6) hindurch reichen.

## Claims

1. Drive, comprising a first drive unit (1) and a second drive unit (2), the first drive unit (1) having a first crown gear (3) and the second drive unit (2) having a second crown gear (4) which interact with one another in the manner of a harmonic drive, the first crown gear (3) being deformable and having a different number of teeth to the second crown gear (4), and the first drive unit (1) having at least two variable-length actuators (5), the at least two actuators (5) being arranged and interacting with the first crown gear (3) in such a way that a length change of the actuators (5) is converted into a deformation of the first crown gear (3) with a perpendicular component with respect to the length change of the actuators (5), **characterized in that** the first drive unit (1) has at least two bending elements (6) and a fastening means (7) which is rigid relative to the deformable first crown gear (3), the bending elements (6) connecting the fastening means (7) to the crown gear (3), and an actuator (5) being arranged fixedly on in each case one bending element (7) in the longitudinal orientation, with the result that a length change of an actuator leads to bending of a bending element (6) and a deformation of the first crown gear (3), and a bending element (6) having a weakened portion (8), preferably in the form of a notch or a groove, between the actuator (5) which is arranged on the bending element (6) and the first crown gear (3), with the result that the bending element (6) yields in the region of the first crown gear (3) upon contact of the first crown gear (3) with the second crown gear (3) in order to improve the contact area between the first crown gear (3) and the second crown gear (3) in this region.

2. Drive according to Claim 1, the perpendicular component of the deformation of the first crown gear (3) being greater, preferably by at least a factor of two, than the length change of the actuators (5).

3. Drive according to either of the preceding claims, the first crown gear (3) and the second crown gear (4) being arranged coaxially or concentrically.

4. Drive according to Claim 3, the fastening means (7) being a shank or a ring.

5. Drive according to Claim 3 or 4, the at least two bending elements (6) being arranged radially or axially.

6. Drive according to one of the preceding claims, an actuator (5) having an electroactive material, for example an electroactive polymer, a magnetostrictive material or a piezoelectric material, preferably a composite material which comprises a piezoelectric ceramic thin film.

7. Drive according to one of the preceding claims, the first drive unit (1) being configured as a stator and the second drive unit (2) being configured as a rotor.

8. Drive according to one of the preceding claims, the first crown gear (3) and the bending elements (6) consisting of the same material or different materials, preferably consisting of an elastically deformable material.

9. Drive according to one of the preceding claims, the actuators (5) being limited with regard to their longitudinal expansion by way of limiting elements (10, 11, 12).

10. Drive according to one of the preceding claims, in each case two actuators (5) being arranged on opposite sides of a bending element (6).

11. Drive according to Claim 10, pins (12) being provided as longitudinal limiting means, which pins (12) reach through bores (13) of a bending element (6).

## Revendications

1. Mécanisme d'entraînement, comprenant une première unité d'entraînement (1) et une deuxième unité d'entraînement (2), la première unité d'entraînement (1) possédant une première couronne dentée (3) et la deuxième unité d'entraînement (2) possédant une deuxième couronne dentée (4), lesquelles coopèrent l'une avec l'autre à la manière d'un engrenage à onde de déformation, la première couronne dentée (3) étant déformable et possédant un nombre de dents différent de la deuxième couronne dentée (4), et la première unité d'entraînement (1) possédant au moins deux actionneurs (5) dont la longueur est modifiable, lesdits deux actionneurs (5) étant disposés et coopérant avec la première couronne dentée (3) de telle sorte qu'une modification de la longueur des actionneurs (5) est convertie en une déformation de la première couronne dentée (3) avec une composante perpendiculaire à la modification de la longueur des actionneurs (5), **caractérisé en ce que** la première unité d'entraînement (1) possède au moins deux éléments flexibles (6) et un moyen de fixation (7) relativement rigide par rapport à la première couronne dentée (3) déformable, les éléments flexibles (6) reliant le moyen de fixation (7) avec la couronne dentée (3) et un actionneur (5) étant respectivement monté sur un élément flexible (7) en position fixe dans le sens longitudinal, de sorte qu'une modification de la longueur d'un actionneur entraîne une flexion d'un élément flexible (6) et une déformation de la première couronne dentée (3), et un élément flexible (6) entre l'actionneur (5) monté sur l'élément flexible (6) et la première couronne dentée (3) possédant un affaiblissement (8), de préférence sous la forme d'une encoche ou d'une rainure, de sorte que l'élément flexible (6) fléchit dans la zone de la première couronne dentée (3) lors d'un contact de la première couronne dentée (3) avec la deuxième couronne dentée (3) en vue d'améliorer la surface de contact entre la première couronne dentée (3) et la deuxième couronne dentée (3) dans cette zone.

2. Mécanisme d'entraînement selon la revendication 1, avec lequel la composante perpendiculaire de la déformation de la première couronne dentée (3) est supérieure, de préférence au moins d'un facteur deux, à la modification de la longueur des actionneurs (5).

3. Mécanisme d'entraînement selon l'une des revendications précédentes, avec lequel la première couronne dentée (3) et la deuxième couronne dentée (4) sont disposées de manière coaxiale ou concentrique.

4. Mécanisme d'entraînement selon la revendication 3, avec lequel le moyen de fixation (7) est une tige ou une bague.

5. Mécanisme d'entraînement selon la revendication 3 ou 4, avec lequel les au moins deux éléments flexibles (6) sont disposés dans le sens radial ou axial.

6. Mécanisme d'entraînement selon l'une des revendications précédentes, avec lequel un actionneur (5) possède un matériau électroactif, par exemple un polymère électroactif, un matériau magnétorestrictif ou un matériau piézoélectrique, de préférence un matériau composite incluant une couche mince en céramique piézoélectrique.

7. Mécanisme d'entraînement selon l'une des revendications précédentes, avec lequel la première unité d'entraînement (1) est réalisée sous la forme d'un stator et la deuxième unité d'entraînement (2) sous la forme d'un rotor.

8. Mécanisme d'entraînement selon l'une des revendications précédentes, avec lequel la première couronne dentée (3) et les éléments flexibles (6) sont constitués du même matériau ou de matériaux différents, de préférence constitués d'un matériau déformable élastique.

9. Mécanisme d'entraînement selon l'une des revendications précédentes, avec lequel l'expansion longitudinale des actionneurs (5) est limitée par des éléments limiteurs (10, 11, 12).

10. Mécanisme d'entraînement selon l'une des revendications précédentes, avec lequel deux actionneurs (5) sont respectivement disposés sur des côtés opposés d'un élément flexible (6).

11. Mécanisme d'entraînement selon la revendication 10, avec lequel les limiteurs de longueur prévus sont des goujons (12) qui font saillie à travers des orifices (13) d'un élément flexible (6).
